# EUROPÄISCHE PATENTSCHRIFT

(11) **EP 0 553 941 B1**
(45) Veröffentlichungstag und Bekanntmachung des Hinweises auf die Patenterteilung: **13.09.1995**
(21) Anmeldenummer: 93250001.0
(22) Anmeldetag: 02.01.1993
(51) Int. Cl.: C09J 133/06, C09J 133/08, C09J 123/06, C09J 7/04

(54) **Heisssiegelkleber**
Hot-melt adhesive
Colle thermo-fusible

(30) Priorität: 25.01.1992 DE 4202070
(43) Veröffentlichungstag der Anmeldung: 04.08.1993
(73) Patentinhaber: HANS NESCHEN GmbH & CO. KG, D-31665 Bückeburg (DE)
(72) Erfinder: Hauber, Rüdiger, Dr., W-3062 Bückeburg (DE)
(74) Vertreter: UEXKÜLL & STOLBERG

(56) Entgegenhaltungen:
- DE-A- 3 544 868

## Beschreibung

Die Erfindung betrifft einen Heißsiegelkleber, ein unter seiner Verwendung hergestelltes Heißsiegelklebeband und dessen Verwendung zum Restaurieren und Konservieren von Papiersubstraten. Bei dem Heißsiegelklebeband handelt es sich insbesondere um ein Heißsiegelklebeband, das einen einseitig mit dem Heißsiegelkleber beschichteten Träger umfaßt.

In Bibliotheken, Büchereien und Archiven lagern oft alte Bücher, Zeitungen, Dokumente, Karten, Grafiken und andere, aus Papier bestehende Archivarien, die im Laufe der Zeit teilweise zerfallen oder in irgendeiner Form beschädigt worden sind und deshalb restauriert oder konserviert werden müssen.

In der EP 84730045 ist ein Papierhaftklebeband beschrieben, das zum Reparieren von eingerissenen Seiten häufig benutzter Bücher oder zum Einbetten ganzflächiger Blattseiten verwendet wird. Mit einem solchen Papierhaftklebeband lassen sich auch Einzelseiten zu Buchlagen für die Fadenheftung verbinden, schadhafte Ränder von Schriftstücken ausbessern oder Buchgelenke innen streifenverstärken.

Für Restaurierungsarbeiten an Papiersubstraten sind in erster Linie Klebebänder mit Papierträgern geeignet, wobei es die Kunst der Papiermacher ist, die richtige Mischung verschiedener Zellstoffsorten zu finden, um leichte Papiere mit den gewünschten Eigenschaften zu fertigen.

Folienträger sind demgegenüber nicht zu empfehlen, da sie ungünstige Alterungseigenschaften besitzen. Für Restaurierungsarbeiten lassen sich beispielsweise 30 µm starke Polyethylenfolien verwenden, die zwischen dem zu reparierenden Papier und einem transparenten Seidenpapier zur Verstärkung gesiegelt werden. Heißgesiegeltes Polyethylen besitzt jedoch keine sehr hohe Adhäsionskraft, so daß die Versiegelung langsam mechanisch abgelöst werden kann, wenn die Fasern der Papiere eine ausreichende Bindefestigkeit aufweisen. Polyethylen ist außerdem gegenüber Lichtstrahlen und Wärme nicht sehr alterungsbeständig und fragmentiert leichter als z.B. Acrylsäureester-Acrylsäure-Copolymerisate.

Besondere Anforderungen muß der Kleber eines Heißsiegelklebebandes erfüllen. In der EP 84730045 wird ein Haftkleber beschrieben, der in Wasser lösbar ist. Wenn das mit ihm ausgerüstete und verklebte Band von der Buchseite ohne Beschädigungen wieder entfernt werden soll, ist der verklebte Bereich einige Minuten in Wasser einzuweichen, damit der Kleber anquellen und redispergieren kann. Der mit diesem Kleber verbundene Nachteil liegt darin, daß beim Einweichen in Wasser das Papier beschädigt und/oder wasserlösliche Tinten oder Druckfarben gelöst werden könnten. Andere dispergierbare oder wasserlösliche Haftkleber, wie sie in den Patentschriften DE 22 14 293, DE 22 36 575, DE 29 04 233, US 3 096 202 und US 3 661 874 beschrieben werden, verfärben sich während der Alterung, durchfetten die Papiere oder weisen die gleichen Nachteile bei Papierrestaurierungen auf, wie sie oben geschildert sind.

Heißsiegelkleber auf Basis von Ethylen-Propylen-Copolymerisaten, Ethylen-Vinylacetat-Copolymerisaten und Polyterpenharzen als Klebrigmacher sind in den Patentschriften DE 19 63 716 und US 3 922 435 angegeben. Die Patentschriften DE 17 19 099 und EP 0 009 937 beschreiben Heißsiegelkleber auf Basis von Styrol-Butadien-Copolymerisaten, die mit Polyacrylharzen, Phthalsäureesterweichmachern, Kolophoniumharzen und Polyvinylpyrrolidon vermischt sind, sowie Blockcopolymere auf Basis von Copolyestern, Copoly-amiden und Copolyesteramiden, die mit Aluminiumpulver und Glasfasern gefüllt sind. Handelsüblich sind beispielsweise Heißsiegelkleber aus Copolymeren von Vinylacetat-Ethylen, Vinylacetat-Acrylsäureester, Vinylacetat-Maleinsäure-din-Butylester und Vinylacetat-Vinyllaurat.

Alle angeführten Heißsiegelkleber sind für Papierrestaurierungen nicht geeignet, da sie entweder keine ausreichende farblose Transparenz aufweisen und sich während der Alterung über viele Jahre allmählich verfärben oder die Adhäsionskraft nur gering ist, so daß sich die Versiegelung zwischen den Papieren löst, wenn das Material häufiger gefalzt oder auf andere Art mechanisch beansprucht wird.

Der Erfindung liegt daher die Aufgabe zugrunde, einen Heißsiegelkleber und ein damit ausgerüstetes Heißsiegelklebeband zu entwickeln. Der Heißsiegelkleber soll eine hohe Verklebungsfestigkeit hervorrufen, sehr alterungsbeständig sein und nach jahrelanger Verklebung keine Verfärbungen zeigen. Er soll relativ leicht und schnell durch Erwärmen ablösbar sein und dabei an dem jeweils abzuziehenden Heißsiegelklebeband haften bleiben, ohne das verklebte Papiersubstrat zu beschädigen oder merkliche Kleberrückstände darauf zu hinterlassen.

Diese Aufgabe wird durch einen Heißsiegelkleber gelöst, der ein Gemisch von:
a) 20 - 60 Gew.% nichtklebenden (Meth-)Acrylsäureester-(Meth-)Acrylsäure-Copolymerisaten, die (Meth-)Acrylsäureestereinheiten mit 2-8 Kohlenstoffatomen in der Alkoholkomponente und, bezogen auf diese Copolymerisate, 1 - 10 Gew.% (Meth-)Acrylsäure enthalten, mit einer Schmelztemperatur im Bereich von 115 bis 150°C und einem K-Wert nach Fikentscher im Bereich von 70 bis 110 (gemessen gemäß DIN 51562 im Tetrahydrofuran),
b) 10 - 50 Gew.% selbstklebenden AcrylsäureesterAcrylsäure-Copolymerisaten, die Acrylsäureestereinheiten mit 2-8 Kohlenstoffatomen in der Alkoholkomponente und, bezogen auf diese Copolymerisate, 1-10 Gew.% Acrylsäure enthalten, mit einer Glasübergangstemperatur T_{G} im Bereich von -45 bis -10°C, einem K-Wert nach Fikentscher im Bereich von 70 bis 120 (gemessen gemäß DIN 51562 in Tetrahydrofuran) und einer Erweichungstemperatur im Bereich von 50 bis 100°C, und
c) 10-50 Gew.% Polyethylen mit einem durchschnittlichen Molekulargewicht von 1000 - 10000
sowie gegebenenfalls üblichen Zusatzstoffen umfaßt.

Bevorzugte Ausführungsform der Erfindung sind Gegenstand der Unteransprüche.

Der Heißsiegelkleber gemäß Anspruch 1 ist farblos, transparent und besitzt eine hohe Adhäsion und Kohäsion, so daß die Falzfestigkeit des Heißsiegelklebebandes, das mit dem erfindungsgemäßen Heißsiegelkleber beschichtet und mit dem Papiersubstrat versiegelt ist, sehr gut ist, und eine unerwünschte Lösung des Klebeverbundes nicht auftritt.

Die ausgezeichnete Versiegelung ist auf das erfindungsgemäße Gemisch von hochmolekularen, lackartig harten (Meth-)Acrylsäureester-(Meth)Acrylsäure-Copolymerisaten mit weichelastischen Acrylsäureester-Acrylsäure-Copolymerisaten zurückzuführen. Die versiegelten Verbundkomponenten lassen sich bei Normaltemperatur nicht voneinander trennen, ohne zu zerreißen oder zu spalten. Bei Temperaturen ab etwa 120°C läßt sich das Klebeband zusammen mit dem Heißsiegelkleber wieder leicht ablösen.

Komponente a) des erfindungsgemäßen Heißsiegelklebers weist vorzugsweise eine Schmelztemperatur im Bereich von 125 bis 135°C und einen K-Wert nach Fikentscher im Bereich von 80 bis 100 (gemessen gemäß DIN 51562 im Tetrahydrofuran) auf. Komponente b) weist vorzugsweise eine Glasübergangstemperatur T_{G} im Bereich von -35 bis -20°C, einen K-Wert nach Fikentscher im Bereich von 80 bis 110 (gemessen gemäß DIN 51562 in Tetrahydrofuran) und eine Erweichungstemperatur im Bereich von 60 bis 90°C auf.

Das Polyethylen hat im Heißsiegelkleber zwei Funktionen. Einerseits verringert es die Verblockungsneigung bis zu Temperaturen von etwa 50°C, andererseits schmilzt es bei der Siegelung schnell und fördert den Fluß des Klebers zwischen die Papierfasern, so daß die Fasern gut eingebettet werden, was zu einer stärkeren Transparenz des Papierklebeverbundes und damit zu einer verbesserten Druckwiedergabe des versiegelten Papiersubstrats führt. In den Kleber kann verzweigtes und unverzweigtes Polyethylen in Primär- oder Sekundärdispersionen eingemischt werden. Vorzugsweise weist das Polyethylen ein durchschnittliches Molekulargewicht von 1000 bis 10000, vorzugsweise 3000 bis 6000 auf, und seine Schmelztemperatur liegt im Bereich von 95 bis 125°C, vorzugsweise 107 bis 115°C.

Als Esterkomponente in den (Meth-)Acrylsäureester-(Meth-)-Acrylsäure-Copolymerisaten und den Acrylsäureester-Acrylsäure-Copolymerisaten sind n-Butylacrylat und/oder 2-Ethylhexylacrylat geeignet, die gegebenenfalls auch nebeneinander vorliegen können.

Die in dem Heißsiegelkleber enthaltenen Copolymerisate können ferner weitere Monomere enthalten, wobei (Meth-)-Acrylnitril, Vinylacetat und Styrol bevorzugt sind.

Das erfindungsgemäße Polymergemisch ist in Wasser dispergierbar. In Form seiner wäßrigen Dispersion läßt sich der Heißsiegelkleber besonders gut verarbeiten. Dabei ist es bevorzugt, daß der pH-Wert der wäßrigen Dispersion mit Ammoniakwasser auf etwa 7,0 bis 8, vorzugsweise 7,0 bis 7,5 eingestellt ist.

Es kann ferner zweckmäßig sein, den Dispersionen in üblichen Mengen Verdicker, Netzmittel und Entschäumer zuzusetzen. Auch können Salze wie Magnesiumcarbonat und Calciumcarbonat zugesetzt werden, die Säuren, welche eventuell aus den Papiersubstraten in den Kleber migrieren, neutralisieren können. Außerdem können die Heißsiegelklebere bakterizid und fungizid wirkende Salze von o-Phenylphenolen enthalten, die ein Wachstum von Bakterien und Pilzen während der Alterung über viele Jahre hemmen oder ausschließen.

Es ist bevorzugt, daß der erfindungsgemäße Heißsiegelkleber außerdem:
d) 1 - 5 Gew.% Magnesium- oder Calciumcarbonat,
e) 0,1 - 1,0 Gew.% Alkalisalze von o-Phenylphenolen und/oder
f) 0,2 - 1,0 Gew.% Entschäumer enthält.

Versiegelungen auf diversen Farbdrucken, Schreib- und Stempeltinten, die mit Hilfe des erfindungsgemäßen Klebers erhalten worden sind, zeigen nach vierwöchiger Lagerung bei bis zu 70°C keine Veränderungen. Ein Ausbluten oder Ausbleichen der Farben und Tinten ist nicht zu beobachten und nur möglich, wenn die Farbpigmente mit migrationsfähigen Substanzen, wie z.B. Weichmachern, vermischt sind.

Als Bandträger eigenet sich insbesondere Papier, wobei alterungsbeständige Papiersorten wie Japan-Seidenpapiere oder technische Papiere mit hoher Transparenz zu bevorzugen sind. Bei den Japan-Seidenpapieren ist darauf zu achten, daß für Restaurierungsarbeiten nur Qualitäten verarbeitet werden, die während der Alterung ihre Bindefestigkeit bewahren, nicht vergilben und nahezu pH-neutral bleiben. Säurehaltige Japan-Seidenpapiere sind für Restaurierungen und Konservierungen nicht zu empfehlen, da sie während der Alterung ihre Haltbarkeit hinsichtlich Reiß- und Falzfestigkeit verlieren und sich gelbbraun verfärben.

Die verwendeten Restaurierungspapiere dürfen kein Lignin enthalten und sollten möglichst frei von Hemicellulosen sein, da sie sonst zu leicht vergilben. Papiere, die diese Forderungen erfüllen, weisen einen hohen Anteil an α-Cellulose auf. Um die Papierfestigkeit zu verbessern, können spezielle Fasern (z.B. Manilahanf) eingemischt werden. Günstig sind auch Papiersorten, die durch eine vliesartige Verfilzung von relativ langen Fasern eine gute Reißfestigkeit besitzen. In der Praxis hat es sich als zweckmäßig erwiesen, als Trägermaterial für das Papierklebeband dünne, transparente Papiere mit einem Gewicht von etwa 7 bis 30, insbesondere 7 bis 12 und bevorzugt 8 bis 10 g/m² einzusetzen, so daß die Klebebänder auf den verklebten Papieren nahezu unsichtbar sind.

Die mit dem Heißsiegelkleber beschichtete Seite des Papierträgers kann ferner zur Vereinfachung der Verarbeitung mit einem silikonisierten Trennpapier abgedeckt sein.

Im folgenden wird die Erfindung anhand von Beispielen näher erläutert.

### Beispiele 1 bis 4

In der folgenden Tabelle sind vier verschiedene Rezepturbeispiele für den erfindungsgemäßen Heißsiegelkleber angegeben. Die Gew.% der Rezepturen beziehen sich auf 100% Festkörper, d.h. ohne die Wasseranteile der Dispersion zu berücksichtigen.

| | Beispiel | | | |
|---|---|---|---|---|
| | 1 | 2 | 3 | 4 |
| (Meth-)Acrylsäureester-(Meth-)Acrylsäure-Copolymerisat, Schmelztemperatur: 125-135°C, K-Wert: 80-100 | 31,8 | 47,5 | 22,7 | 60,0 |
| Acrylsäureester-Acrylsäure-Copolymerisat, T_{G}: -20 bis -40°C, K-Wert: 80-110, Erweichungstemperatur: 60-90°C | 40,0 | 20,0 | 35,0 | 17,0 |
| Polyethylen, Molgewicht: 3.000-6.000, Schmelztemperatur: 107-115°C | 25,0 | 30,0 | 40,0 | 20,0 |
| Magnesium- oder Calciumcarbonat | 2,2 | 1,6 | 1,1 | 1,8 |
| Na-Salz von o-Phenylphenolen | 0,4 | 0,3 | 0,6 | 0,6 |
| Entschäumer | 0,6 | 0,6 | 0,6 | 0,6 |

Die Heißsiegeldispersionen werden auf silikonisierte Trennpapiere oder Polyesterfolien aufgetragen, getrocknet und anschließend auf japanische Seidenpapiere oder technische Spezialpapiere mittels einer Heizwalze kaschiert (Papiergewicht: 7 bis 15 g/m², Kleberauftrag trocken: 7 bis 25 g/m²).

In der Praxis ist für die Übertragung des Heißsiegelklebers auf Seidenpapiere ein Endlostrennmaterialband zu bevorzugen, weil dann das Trennmaterial als Abfallprodukt entfällt. Trennpapiere (67 bis 120 g/m²) deformieren jedoch bei mehrmaliger wäßriger Beschichtung und können die Kaschierqualität durch die Oberflächenrauhigkeit beeinträchtigen. Silikonisierte Polyesterfolien (50 bis 75 µm Stärke) dürfen bei der Kaschierung nicht zu starkt erhitzt werden, da sie sonst viele kleine Falten bilden. Es hängt von der Geschicklichkeit des Maschinenführers ab, optimale Kaschierbedingungen zu schaffen.

Da transparente, dünne Seidenpapiere (ca. 8 g/m²) eine sehr geringe Festigkeit aufweisen und bei der Weiterverarbeitung leicht einreißen, ist es oft günstiger, das Papierklebeband mit Trennpapier als Hilfsträger zu konfektionieren. Das Papierklebeband kann ohne Trennpapier als Rollenware und als Bogenstapel gelagert werden, wobei ein möglichst geringer Wickel- oder Stapeldruck zu empfehlen ist, und die Lagertemperatur bei 18 bis 25°C liegen soll. Kurzfristig ist eine Lagerung bis maximal 45°C möglich. Sind Preßdruck und Temperatur zu hoch, verblocken die Papierklebebandlagen. Ist das Papierklebeband mit Silikonpapier abgedeckt, gibt es keine Verarbeitungsschwierigkeiten bei höheren Preßdrucken und Temperaturen. Das Papierklebeband wird auf zu restaurierenden Materialien wie z.B. Zeitungen, Buchseiten, Grafiken und anderen aus Papier bestehenden Archivarien mit einer beheizten Presse aufgesiegelt (Preßbedingungen: Druck 9 kg/cm², Temperatur: ca. 120°C, Zeit: 1 Minute).

Wird die kleberfreie Seite des Papierklebebandes mit der Silikonfilmseite eines silikonisierten Papieres abgedeckt, ist die Oberfläche des Papierbandes nach der Siegelung glänzend. Die Oberfläche des Papierbandes ist matt, wenn bei der Versiegelung mit einem Polyestersieb abgedeckt wird.

## Patentansprüche

1. Heißsiegelkleber, dadurch gekennzeichnet, daß er ein Gemisch von:
a) 20 - 60 Gew.% nichtklebenden (Meth-)Acrylsäureester-(Meth-)Acrylsäure-Copolymerisaten, die (Meth-)Acrylsäureestereinheiten mit 2-8 Kohlenstoffatomen in der Alkoholkomponente und, bezogen auf diese Copolymerisate, 1 - 10 Gew.% (Meth-)Acrylsäure enthalten, mit einer Schmelztemperatur im Bereich von 115 bis 150°C und einem K-Wert nach Fikentscher im Bereich von 70 bis 110 (gemessen gemäß DIN 51562 im Tetrahydrofuran),
b) 10 - 50 Gew.% selbstklebenden Acrylsäureester-Acrylsäure-Copolymerisaten, die Acrylsäureestereinheiten mit 2-8 Kohlenstoffatomen in der Alkoholkomponente und, bezogen auf diese Copolymerisate, 1-10 Gew.% Acrylsäure enthalten, mit einer Glasübergangstemperatur T_{G} im Bereich von -45 bis -10°C, einem K-Wert nach Fikentscher im Bereich von 70 bis 120 (gemessen gemäß DIN 51562 in Tetrahydrofuran) und einer Erweichungstemperatur im Bereich von 50 bis 100°C, und
c) 10-50 Gew.% Polyethylen mit einem durchschnittlichen Molekulargewicht von 1000 - 10000
sowie gegebenenfalls üblichen Zusatzstoffen umfaßt.

2. Heißsiegelkleber nach Anspruch 1, dadurch gekennzeichnet, daß Komponente a) eine Schmelztemperatur im Bereich von 125 - 135°C und einen K-Wert im Bereich von 80 bis 100 aufweist und/oder Komponente b) eine Glasübergangstemperatur T_{G} im Bereich von -35 bis - 20°C, einen K-Wert im Bereich von 80 bis 110 und eine Erweichungstemperatur im Bereich von 60 - 90°C aufweist.

3. Heißsiegelkleber nach einem der Ansprüche 1 oder 2, dadurch gekennzeichnet, daß die Schmelztemperatur des Polyethylens im Bereich von 95 bis 125°C liegt.

4. Heißsiegelkleber nach einem der Ansprüche 1 bis 3, dadurch gekennzeichnet, daß das durchschnittliche Molekulargewicht des Polyethylens 3000 bis 6000 beträgt und/oder seine Schmelztemperatur im Bereich von 107 bis 115°C liegt.

5. Heißsiegelkleber nach einem der Ansprüche 1 bis 4, dadurch gekennzeichnet, daß die (Meth-)Acrylsäureester-(Meth-)Acrylsäure-Copolymerisate und die Acrylsäureester-Acrylsäure-Copolymerisate als Esterkomponente n-Butylacrylat und/oder 2-Ethylhexylacrylat enthalten.

6. Heißsiegelkleber nach einem der Ansprüche 1 bis 5, dadurch gekennzeichnet, daß in die Copolymerisate weitere Monomere, vorzugsweise (Meth-)Acrylnitril, Vinylacetat und Styrol einpolymerisiert sind.

7. Heißsiegelkleber nach einem der Ansprüche 1 bis 6, dadurch gekennzeichnet, daß er in Form einer wäßrigen Dispersion auf den Träger aufgetragen worden ist.

8. Heißsiegelkleber nach einem der Ansprüche 1 bis 7, dadurch gekennzeichnet, daß er in Form einer wäßrigen, mit Ammoniakwasser auf einen pH-Wert von etwa 7,0 bis 8 eingestellten Dispersion auf den Träger aufgetragen worden ist.

9. Heißsiegelkleber nach Anspruch 8, dadurch gekennzeichnet, daß er in Form einer wäßrigen, mit Ammoniakwasser auf einen pH-Wert von etwa 7,0 bis 7,5 eingestellten Dispersion auf den Träger aufgetragen worden ist.

10. Heißsiegelkleber nach einem der Ansprüche 1 bis 9, dadurch gekennzeichnet, daß er außerdem:
d) 1 - 5 Gew.% Magnesium- oder Calciumcarbonat,
e) 0,1 - 1,0 Gew.% Alkalisalze von o-Phenylphenolen und/oder
f) 0,2 - 1,0 Gew.% Entschäumer enthält.

11. Verwendung des Heißsiegelkleber gemäß einem der Ansprüche 1 bis 10 zur Herstellung eines Papierheißsiegelklebebandes.

12. Papierheißsiegelklebeband, das einen einseitig mit einem Heißsiegelkleber gemäß einem der Ansprüche 1 bis 10 beschichteten Papierträger umfaßt.

13. Papierheißsiegelklebeband nach Anspruch 12, dadurch gekennzeichnet, daß die beschichtete Seite des Papierträgers mit einem silikonisierten Trennpapier als Verarbeitungshilfsträger abgedeckt ist.

14. Papierheißsiegelklebeband nach Anspruch 12 oder 13, dadurch gekennzeichnet, daß der Papierträger ein Gewicht von 7 - 30 g/m² aufweist.

15. Papierheißsiegelklebeband nach einem der Ansprüche 12 bis 14, dadurch gekennzeichnet, daß der Papierträger aus einem transparenten, alterungsbeständigen Papier mit einem Gewicht von 8 - 10 g/m² besteht.

16. Verwendung des Papierheißsiegelklebebandes gemäß einem der Ansprüche 12 bis 15 zur Restaurierung und Konservierung von Papiersubstraten.

## Claims

1. Heat-sealing adhesive, characterized in that it comprises a mixture of:
a) 20 - 60 % by wt. non-adhesive (meth)acrylic acid ester - (meth)acrylic acid copolymerisates which contain (meth)acrylic acid ester units having 2-8 carbon atoms in the alcohol component and, relative to these copolymerisates, 1 - 10 % by wt. (meth)acrylic acid, with a melting temperature in the range from 115 to 150 °C and K value according to Fikentscher in the range from 70 to 110 (measured according to DIN 51562 in tetrahydrofuran),
b) 10 - 50 % by wt. self-adhering acrylic acid ester - acrylic acid copolymerisates which contain acrylic acid ester units having 2-8 carbon atoms in the alcohol component and, relative to these copolymerisates, 1 - 10 % by wt. acrylic acid, having a glass transition temperature T_{G} in the range from -45 to -10°C, a K value according to Fikentscher in the range from 70 to 120 (measured according to DIN 51562 in tetrahydrofuran) and a softening temperature in the range from 50 to 100 °C, and
c) 10 - 50 % by wt. polyethylene having an average molecular weight of 1000 - 10000
and optionally usual additives.

2. Heat-sealing adhesive according to claim 1, characterized in that component a) has a melting temperature in the range from 125 - 135 °C and a K value in the range from 80 to 100 and/or component b) has a glass transition temperature T_{G} in the range from -35 to -20°C, a K value in the range from 80 to 110 and a softening temperature in the range from 60 - 90°C.

3. Heat-sealing adhesive according to one of claims 1 or 2, characterized in that the melting temperature of the polyethylene lies in the range from 95 to 125°C.

4. Heat-sealing adhesive according to one of claims 1 to 3, characterized in that the average molecular weight of the polyethylene is 3000 to 6000 and/or its melting temperature lies in the range from 107 to 115°C.

5. Heat-sealing adhesive according to one of claims 1 to 4, characterized in that the (meth)acrylic acid ester - (meth)acrylic acid copolymerisates and the acrylic acid ester - acrylic acid copolymerisates contain n-butyl acrylate and/or 2-ethylhexyl acrylate as ester component.

6. Heat-sealing adhesive according to one of claims 1 to 5, characterized in that further monomers, preferably (meth)acrylonitrile, vinyl acetate and styrene, are polymerised into the copolymerisates.

7. Heat-sealing adhesive according to one of the claims 1 to 6, characterized in that is has been deposited on the carrier in the form of an aqueous dispersion.

8. Heat-sealing adhesive according to one of the claims 1 to 7, characterized in that it has been deposited on the carrier in the form of an aqueous dispersion set at a pH value of approximately 7.0 to 8 using ammonia water.

9. Heat-sealing adhesive according to claim 8, characterized in that it has been deposited on the carrier in the form of an aqueous dispersion set to a pH value of approximately 7.0 to 7.5 using ammonia water.

10. Heat-sealing adhesive according to one of claims 1 to 9, characterized in that it also contains:
d) 1 - 5 % by wt. magnesium or calcium carbonate,
e) 0.1 - 1.0 % by wt. alkaline salts of o-phenyl phenols and/or
f) 0.2 - 1.0 % by wt. antifoaming agent.

11. Use of the heat-sealing adhesive according to one of claims 1 to 10 for the production of a paper heat-sealing adhesive tape.

12. Paper heat-sealing adhesive tape which comprises a paper carrier coated on one side with a heat-sealing adhesive according to one of claims 1 to 10.

13. Paper heat-sealing adhesive tape according to claim 12, characterized in that the coated side of the paper carrier is covered with a siliconized release paper as processing auxiliary carrier.

14. Paper heat-sealing adhesive tape according to claim 12 or 13, characterized in that the paper carrier has a weight of 7 - 30 g/m².

15. Paper heat-sealing adhesive tape according to one of claims 12 to 14, characterized in that the paper carrier consists of a transparent, age-resistant paper having a weight of 8-10 g/m².

16. Use of the paper heat-sealing adhesive tape according to one of claims 12 to 15 for the restoration and preservation of paper substrates.

## Revendications

1. Colle thermofusible, caractérisée en ce qu'elle comprend un mélange de
a) de 20-60% en poids de copolymères non collants d'esters (méth)acryliques-acide (méth)acrylique contenant des motifs d'ester (méth)acrylique avec 2-8 atomes de carbone dans le composant alcool et, par rapport à ces copolymères, 1-10% en poids d'acide (méth)acrylique, avec une température de fusion dans la plage de 115 à 150°C et une valeur K selon Fikentscher dans la gamme de 70 à 110 (mesurée selon DIN 51562 dans le tétrahydrofuranne),
b) 10-50% en poids de copolymères d'esters acryliques-acide acrylique autocollants contenant des motifs d'ester acrylique avec 2-8 atomes de carbone dans le composant alcool et, par rapport à ces copolymères, 1-10% en poids d'acide acrylique, avec une température de transition vitreuse T_{G} dans la plage de -45 à -10°C, une valeur K selon Fikentscher dans la gamme de 70 à 120 (mesurée selon DIN 51562 dans le tétrahydrofuranne) et une température de ramollissement dans la plage de 50 à 100°C, et
c) 10-50% en poids de polyéthylène ayant un poids moléculaire moyen de 1000 à 10000, ainsi qu'éventuellement les adjuvants usuels.

2. Colle thermofusible selon la revendication 1, caractérisée en ce que le composant a) présente une température de fusion dans la plage de 125-135°C et une valeur K dans la gamme de 80 à 100 et/ou que le composant b) présente une température de transition vitreuse T_{G} dans la plage de -35 à -20°C, une valeur K dans la gamme de 80 à 110 et une température de ramollissement dans la plage de 60-90°C.

3. Colle thermofusible selon une des revendications 1 ou 2, caractérisée en ce que la température de fusion du polyéthylène se situe dans la plage de 95 à 125°C.

4. Colle thermofusible selon l'une des revendications 1 à 3, caractérisée en ce que le poids moléculaire moyen du polyéthylène s'élève à 3000-6000 et/ou son point de fusion se situe dans la plage de 107 à 115°C.

5. Colle thermofusible selon l'une des revendications 1 à 4, caractérisée en ce que les copolymères d'esters (méth)acryliques-acide (méth)acrylique et les copolymères d'esters acryliques-acide acrylique contiennent en tant que composants esters de l'acrylate de n-butyle et/ou de l'acrylate de 2-éthylhexyle.

6. Colle thermofusible selon l''une des revendications 1 à 5, caractérisée en ce que des monomères additionnels, de préférence du (méth)acrylonitrile, de l'acétate de vinyle et du styrène sont incorporés par polymérisation dans les copolymères.

7. Colle thermofusible selon l'une des revendications 1 à 6, caractérisée en ce qu'elle a été appliquée sur le support sous forme d'une dispersion aqueuse.

8. Colle thermofusible selon l'une des revendications 1 à 7, caractérisée en ce qu'elle a été appliquée sur le support sous forme d'une dispersion aqueuse ajustée avec de l'eau ammoniacale à une valeur de pH d'environ 7,0 à 8.

9. Colle thermofusible selon la revendication 8, caractérisée en ce qu'elle a été appliquée sur le support sous forme d'une dispersion aqueuse ajustée avec de l'eau ammoniacale à une valeur de pH d'environ 7,0 à 7,5.

10. Colle thermofusible selon l'une des revendications 1 à 9, caractérisée en ce qu'elle contient en outre
d) 1-5% en poids de carbonate de magnésium ou de calcium,
e) 0,1-1,0% en poids de sels alcalins d'o-phénylphénols et/ou
f) 0,2-1,0% en poids d'antimousse.

11. Utilisation de la colle thermofusible selon l'une des revendications 1 à 10 pour la confection d'une bande adhésive thermofusible en papier.

12. Bande adhésive thermofusible en papier qui comporte un support en papier revêtu sur une face d'une colle thermofusible selon l'une des revendications 1 à 10.

13. Bande adhésive thermofusible en papier selon la revendication 12, caractérisée en ce que la face enduite du support en papier est recouverte d'un papier intercalaire siliconé en tant que support auxiliaire de transformation.

14. Bande adhésive thermofusible en papier selon la revendication 12 ou 13, caractérisée en ce que le esupport en papier présente un poids de 7-30 g/m².

15. Bande adhésive thermofusible en papier selon l'une des revendications 12 à 14, caractérisée en ce que le support en papier est constitué par un papier transparent, résistant au vieillissement d'un poids de 8-10 g/m².

16. Utilisation de la bande adhésive thermofusible en papier selon l'une des revendications 12 à 15 pour la restauration et la conservation de substrats en papier.
